# EUROPÄISCHE PATENTANMELDUNG

(11) **EP 0 841 451 A2**
(43) Veröffentlichungstag der Anmeldung: **13.05.1998**
(21) Anmeldenummer: 97118571.5
(22) Anmeldetag: 25.10.1997
(51) Int. Cl.: E05F 3/02, E05F 3/16, F16F 11/00, F16F 9/02

(54) **Brems- und Dämpfungselement für bewegliche Möbelteile**

(30) Priorität: 08.11.1996 DE 19646168; 29.04.1997 DE 19717937
(71) Anmelder: Grass AG, 6973 Höchst/Vlbg. (AT)
(72) Erfinder: Jochum, Peter, Ing., 6812 Meiningen (AT)
(74) Vertreter: Riebling, Peter, Dr.-Ing.

(57) **Zusammenfassung**

Die Erfindung betrifft ein Brems- und Dämpfungselement für bewegliche Möbelteile, welches im wesentlichen aus einem Zylinderelement (1) besteht, in welchem ein radial dehnbarer Kolben (3) längsbeweglich aufgenommen ist. Der Kolben sitzt relativ dicht in der Zylinderbohrung und weist eine stirnseitige Ausnehmung (10) auf, die mit dem durch den Zylinder und den Kolben gebildeten luftgefüllten Hohlraum (53) verbunden ist.
Durch die von einem mit dem Kolben verbundenen Möbelteil ausgeübte Druckkraft wird die im Hohlraum und der Ausnehmung des Kolbens befindliche Luft komprimiert, wodurch eine radiale Spreizung des Kolbens (3) erfolgt.
Es entsteht eine Bremswirkung durch Ausdehnung des Kolbendurchmessers, welche zusätzlich zu der durch die Kompression der Luft hervorgerufenen Dämpfungswirkung auftritt.

## Beschreibung

Die Erfindung betrifft ein Brems- und Dämpfungselement für bewegliche Möbelteile, insbesondere für Türen, Klappen, Schiebetüren, Schubkästen oder dergleichen.

Dämpfungselemente für bewegliche Möbelteile sind bereits bekannt. So zeigt z. B. die DE-GM 81 30 405 ein Dämpfungselement für Möbeltüren bzw. Schubladen für den Übergang von der Offenstellung in die Schließstellung. Diese bekannte Anordnung verwendet einen Gummipuffer oder ein anderes elastisches Material, das zwischen den beweglichen Teilen und dem festen Möbelteil angebracht wird. Die Dicke eines derartigen Dämpfungsgliedes ist begrenzt, da z. B. für den Einsatz bei einer Türe die Fuge zwischen Türe und Möbelkorpus nicht zu groß werden darf. In Folge dessen ist die dämpfende und stoßschluckende Funktion des eingelegten Dämpfungselements begrenzt. Da ein solches Dämpfungselement kein progressives Dämpfungsverhalten aufweist bzw. keine Vorbremsung ermöglicht schlägt das bewegliche Möbelteil immer noch relativ hart auf den Möbelkorpus auf.

Aus der DE-OS 27 08 545 ist eine Dämpfung speziell für Gelenkscharniere bekannt geworden, wobei im Möbelscharnier ein elastisch verformbares Dämpfungselement derart angeordnet ist, daß durch ein Verschwenken des Scharniers kurz vor Erreichen der Endstellung des Scharniers verformt wird und so ein gewisser Dämpfungseffekt erzielt wird. Auch hier wir kein progressiver Dämpfungseffekt erreicht, wobei zudem der Schließkraft des Scharniers durch das Vorhandensein des elastischen Dämpfungselementes entgegengewirkt wird.

Aufgabe der vorliegenden Erfindung ist es daher, ein Brems- und Dämpfungselement der eingangs genannten Art vorzuschlagen, das für alle beweglichen Möbelteile gleichermaßen geeignet ist und durch ein progressives Dämpfungsverhalten ein schall- und stoßgedämpftes Schließen des beweglichen Möbelteils ermöglicht.

Gelöst wird diese Aufgabe durch die technische Lehre des Anspruchs 1.

Merkmal der Erfindung ist, daß das Brems- und Dämpfungselement im wesentlichen aus einer zylinderartigen Hülse besteht, in welcher ein Schieber mit einem in radialer Richtung spreizbaren Kolben beweglich gelagert ist.

Der Kolben schließt zusammen mit dem Zylinder einen Hohlraum ein, wobei durch Eindrücken des Kolbens in den Zylinderhohlraum, durch Krafteinwirkung eines beweglichen Möbelteils, die darin enthaltene Luft komprimiert wird. Der Kolben ist derart ausgebildet, daß eine durch Einschub des Kolbens erfolgte Komprimierung der Luft eine radiale Ausdehnung oder Spreizung des Kolbens bewirkt, wodurch neben dem Dämpfungseffekt durch die komprimierte Luft auch ein Bremseffekt durch Reibung des Kolbens an der Innenwand des Zylinders entsteht.

Vorzugsweise verfügt der Kolben über eine Spreizhülse aus elastischem Material, welche den Kolben ganz oder teilweise umgibt, so daß die erzielte Bremswirkung durch höhere Reibungszahl der Spreizhülse erhöht wird.

Gegenüber dem Stand der Technik wird durch die vorliegende Erfindung der Vorteil erzielt, daß das bewegliche Möbelteil vor seiner Schließstellung progressiv abgebremst und gedämpft wird, wobei z. B. bei Möbeltüren, die durch die Scharniere vorgegebene Schließwirkung noch voll einsetzen kann, so daß die Möbeltüre langsam und kontrolliert in ihre Schließstellung gebraucht wird.

Weiterer Vorteil ist, daß durch das erfindungsgemäße Brems- und Dämpfungselement unabhängig von der Art und Bauform der Möbelteile bzw. Möbelscharniere als separates Bremselement verwendet werden kann und daher universell einsetzbar ist.

Weiterer Vorteil ist, daß nach Verlassen der Schließstellung, also beim Öffnen der geschlossenen Türe bzw. Schublade, das Brems- und Dämpfungselement durch seine eigene Rückstellkraft, die durch ein geeignetes Rückstellmittel aufgebracht in seine Ausgangsstellung zurückgebracht wird. Eine andere Möglichkeit ist, daß das Brems- und Dämpfungselement durch das bewegliche Möbelteil selbst in seine Ausgangsstellung zurückgebracht wird.

In einer ersten Ausführungsform ist das Brems- und Dämpfungselement im wesentlichen dreiteilig ausgeführt. Bestehend aus einem rohrförmig langgestreckten Zylinder aus Metall oder Kunststoff, der eine einseitig offene Bohrung aufweist. Die Außenform des Zylinders ist beliebig kann aber dem Design benachbarter Möbelbeschläge bzw. dem Einsatzzweck angepaßt sein.
In einer vorteilhaften Ausführungsform ist der Zylinder an einem Scharnier angebaut oder einstückig z. B. an einer Scharniergrundplatte angeformt ist.

Für einen unabhängigen Einsatz weist der Zylinder vorteilhaft Anschraubflansche zur Befestigung am Möbel auf oder eine auf seiner geschlossenen Seite ausgebildete Befestigungslasche zur schwenkbaren Halterung in einem Lagerbock.
In der Zylinderbohrung ist ein Kolben mit Gleitsitz längenverschiebbar eingesteckt. Im Prinzip ist der Kolben radial spreizbar ausgeführt. An den Kolben schließt sich ein größtenteils außerhalb des Zylinders befindlicher Schieber zur axialen Verschiebung des Kolbens an. Der Schieber dient zur Übertragung der Kraftwirkung des zu bremsenden Möbelteils auf den Kolben, wobei der Schieber mit beliebigen Kupplungsmitteln zur Kraftübertragung vom beweglichen Möbelteil ausgestattet ist.

In einer bevorzugten Ausführung ist der Kolben ganz oder teilweise mit einer Spreizhülse umgeben, die aus einem elastischen Kunststoff oder einer Gummimischung oder anderen entsprechenden Elastomeren mit einer nicht zu geringen Reibungszahl besteht, wobei die Hülse mit eine durchgehende Bohrung aufweist und auf den Kolben aufgesteckt oder anderweitig auf diesem befestigt wird. Dazu weist der Kolben auf seinem Außenumfang z.B. kammartige Ringe oder Rippen auf, welche in zugehörige, ringförmigen Nuten an der Innenwand der Spreizhülse eingreifen und so einerseits die axiale Mitnahme der Spreizhülse sicherstellen und andererseits durch Abstützung die Beibehaltung Außenform des elastischen Kolbens bewirken. Die Anzahl dieser kammartigen Ringe oder Rippen ist beliebig. Anstelle der Rippen sind auch Mitnehmer mit anderen Formen erfindungsgemaß möglich.

Vorzugsweise ist die aufgesteckte Spreizhülse um eine Dichtzone länger als der Kolben. Im Bereich der Dichtzone ist der Außendurchmesser der Hülse um einen kleinen Betrag größer ausgeführt, um einen satten Dichtsitz an der Innenwand der Zylinderbohrung zu erreichen.
Am Umfang dieser Dichtzone ist eine gewindeartige Nut eingeformt, welche stirnseitig offen ist und nach der Dichtzone in einen oder auch in mehrere längsgestreckte etwas größere Lüftungskanäle mündet. Diese Lüftungskanäle sind auf der entgegengesetzten Stirnseite ebenförmig offen.

In dem Innendurchmesser kann an der Stirnseite der Spreizhülse eine Dichtlippe angeformt sein, die am Zapfenhals dichtend anliegt. Der Kolben besitzt stirnseitig einen Schlitz, der luftleitend mit dem Hohlraum des Zylinders in Verbindung steht und dadurch bei Kompression der im Hohlraum enthaltenen Luft eine radiale Ausdehnung des Kolbens bewirkt.

Im folgenden wird die Erfindung anhand von mehrere Ausführungswege darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: Eine seitliche Schnittdarstellung des Brems- und Dämpfungselements in einer ersten Ausführungsform;
- Figur 2:: einen Querschnitt durch das Brems- und Dämpfungselement gemäß Figur 1;
- Figur 3:: einen Querschnitt durch eine weitere, flach ausgebildete Ausführungsform des Brems- und Dämpfungselements;
- Figur 4:: einen seitlichen Schnitt des vorderen Teils des Kolbens in einer weiteren Ausführung mit Mitnehmerflansch und aufgesetzer Spreizhülse;
- Figur 5:: eine Seitenansicht des Schiebers mit Kolben in der Ausführungsform nach Figur 1;
- Figur 6:: eine Vorderansicht des Schiebers mit Kolben gemäß Figur 5;
- Figur 7:: einen Schnitt durch die Spreizhülse gemäß Figur 1;
- Figur 8:: eine Seitenansicht der Spreizhülse gemäß Figur 1;
- Figur 9:: eine seitliche Schnittdarstellung des Zylinders;
- Figur 10:: eine Seitenansicht der Spreizhülse;
- Figur 11:: eine Seitenansicht des Schiebers mit Kolben;
- Figur 11a:: den Kolben in einer weiteren Ausführungsform;
- Figur 11b:: den Kolben in einer abgewandelten Ausführungsform; gegenüber Figur 11a;
- Figur 12:: einen seitlichen Schnitt durch eine Spreizhülse in einer zweiten Ausführungsform mit glatter Innenwand;
- Figur 13:: eine Seitenansicht der Spreizhülse gemäß Figur 12;
- Figur 14:: einen seitlichen Schnitt durch eine weitere Ausführungsform des Brems- und Dämpfungselements mit abgewandelter Kolben- und Schieberform;
- Figur 15:: den Kolben in der Ausführungsform gemäß Figur 14;
- Figur 16:: den Schieber in der Ausführungsform gemäß Figur 14;
- Figur 17:: einen Schnitt durch das Brems- und Dämpfungselement gemäß den vohergehenden Figuren mit eingesetzter Rückstellfeder;
- Figur 18:: eine Ausführungsform des Zylinders mit Entlüftungsöffnungen und Rückschlagventil;
- Figur 19:: eine Ausführungsform des Zylinders mit einstellbarer Entlüftungsvorrichtung;
- Figur 20:: eine weitere Ausführungsform des Zylinders mit einstellbarer Entlüftungsvorrichtung und Befestigungsflansch;
- Figur 21:: einen Längsschnitt durch eine Ausführungsform des Brems- und Dämpfungselements mit abgewandelter Formgebung des Kolbens;
- Figur 22:: einen Querschnitt durch das Brems- und Dämpfungselement gemäß Figur 21;
- Figur 23:: einen Querschnitt durch das Brems- und Dämpfungselement gemäß Figur 21 mit sternförmiger Innenausnehmung;
- Figur 24:: eine weitere Ausführungsform des Kolbens des Brems- und Dämpfungselements.
- Figur 25:: einen seitlichen Schnitt durch ein an einer Schublade montiertes Dämpfungselement in einer weiteren Ausführung;
- Figur 26:: einen Schnitt von oben durch die Ausführung gemäß Figur 25;
- Figur 27:: einen vergrößerten Ausschnitt der Befestigung des Zylinders gemäß Figuren 25 und 26;
- Figur 28:: einen Schnitt durch Figur 27 entlang der Linie A-A;
- Figur 29:: einen seitlichen Schnitt durch eine weiter Ausführungsform des Dämpfungelements;
- Figur 30:: einen Schnitt durch Figur 29 entlang der Linie A-A
- Figur 31:: einen vergrößerten Ausschnitt aus Figur 29 im Bereich der Entlüftungskanals.

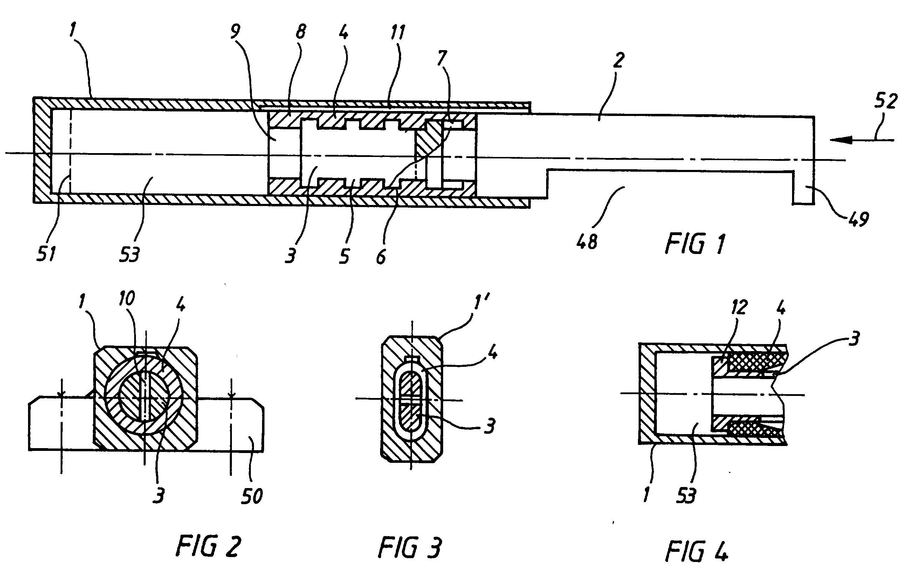

Eine erste Ausführungsform des Dämpf- und Bremselements ist in den Figuren 1 bis 11 dargestellt.

Das Brems- und Dämpfungselement besteht im wesentlichen aus einem Zylinder 1 bzw. aus einem Kunststoff- oder Metallteil beliebiger Formgebung welches eine zylindrische oder ovale, einseitig offene Bohrung aufweist, die den Zylinderinnenraum bildet.

Im Zylinder 1 ist ein in radialer Richtung spreizbarer oder dehnbarer Kolben 3 über einen Schieber 2 in Längsrichtung beweglich geführt, wobei die Außenfläche des Kolbens 3 derart ausgebildet ist, daß dieser im Dichtsitz an der Innenwand des Zylinders 1 anliegt. Vorzugsweise ist der Kolben 3 mit einer Spreizhülse 4 aus elastomerem Material umgeben, welche die Dichtwirkung und den Reibungswiderstand zwischen Kolben 3 und Zylinderinnenwand erhöht.

Der Kolben 3 weist in Umfangsrichtung kammartige Ringe oder Rippen 5 auf, welche in zugeordnete Nuten 6 der Spreizhülse 4 eingreifen, so daß die Spreizhülse fest am Kolben anliegt und auch bei Längsbewegung des Kolbens 3 nicht abrutscht.

Im Übergangsbereich zwischen Schieber 2 und Kolben 3 besitzt die Spreizhülse 4 eine Dichtlippe 7.

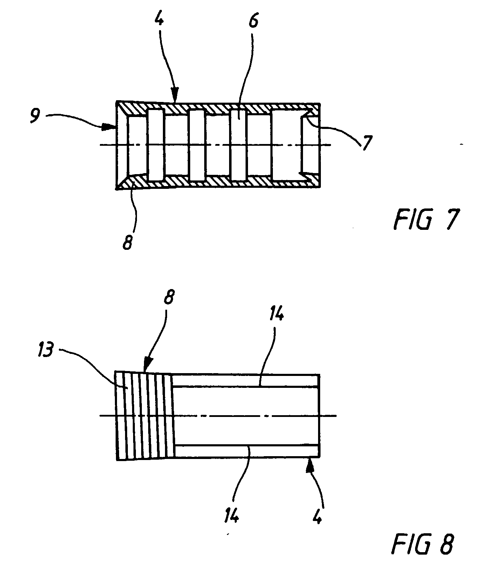

Die auf den Kolben 3 aufgesteckte Spreizhülse 4 steht ein Stück über den Kolben hinaus und bildet eine Dichtzone 8. Diese Dichtzone 8 ist wie in Figur 7 zu erkennen in ihrem Durchmesser etwas größer als der übrige Teil der Spreizhülse 4, so daß in diesem Bereich eine gute Dichtwirkung bzw. ein gutes Anliegen an der Innenwand des Zylinders 1 erzielt wird.

Der Kolben 3 weist an seiner Stirnseite eine z.B. schlitzartige Ausnehmung 10 auf, welche sich etwa über die halbe Länge des Kolbens 3 erstreckt. Die Spreizhülse 4 ist stirnseitig im Bereich der Dichtzone 8 offen, weist also eine Bohrung 9 auf, so daß der durch die Schlitzöffnung 10 gebildete Innenraum des Spreizkolbens 3 mit dem Hohlraum 53 verbunden ist, der durch den Zylinder 1 und den Kolben 3 eingeschlossen wird.

In Figur 3 ist dargestellt, daß die Formgebung des Zylinders 1 bzw. der gesamten Brems- und Dämpfungsanordnung im Querschnitt nicht nur kreisförmig sondern auch oval oder anderweitig ausgebildet sein kann.

Figur 4 zeigt eine mögliche Abwandlung der Ausbildung des Kolbens 3, wobei an der Stirnseite des Kolbens ein Mitnehmerflansch 12 angeordnet ist, um einen festen Abschluß für das Elastikelement zu bilden und dieses bei Bewegung des Kolbens 3 mitzunehmen.

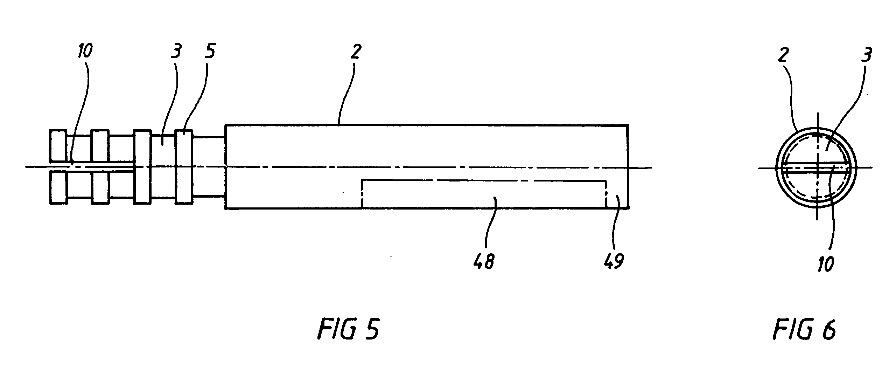

Wie in den Figuren 1 und 5 dargestellt ist, weist der Schieber 2 vorzugsweise eine Ausnehmung 48 auf, welche als Befestigungsfläche dient, um den Schieber 2 z. B. mit einem Mitnehmerteil des zu bremsenden beweglichen Möbelteils zu verbinden. In gleicher Weise kann zur Kupplung mit dem beweglichen Möbelteil ein durch die Ausnehmung 48 gebildete Kupplungsflansch 49 dienen.

Figur 6 zeigt eine Vorderansicht des Kolbens gemäß Figur 5, wobei die Schlitzausnehmung 10 gut zu erkennen ist.

In den Figuren 7 und 8 ist die Spreizhülse 4 nochmals im einzelnen dargestellt, wobei zu erkennen ist, daß im Bereich der Dichtzone 8 am Außenumfang der Spreizhülse schraubenförmige Luftkanäle 13 in Form einer gewindeartigen, stirnseitg offenen Nut eingelassen sind. Diese Luftkanäle 13 stehen in Verbindung mit wenigstens einem in Längsrichtung verlaufenden, größeren Luftkanal 14 der in der gegenüberliegenden Stirnseite der Spreizhülse mündet, so daß bei eingesetzter Spreizhülse 4 in den Zylinder 1 ein Luftaustausch zwischen Zylinderinnerem 53 und Außenatmosphäre möglich ist.

Die Funktionsweise der in den Figuren 1 bis 11 beschriebenen Anordnung ist wie folgt:

In Figur 1 befindet sich das Brems- und Dämpfungselement in seiner Ausgangsstellung. Wird nun durch ein bewegliches Möbelteil, z. B. eine Möbeltüre, eine Kraft in Richtung 42 auf das Ende des Schiebers 2 ausgeübt, so wird dieser mit samt dem Kolben 3 und der aufgesetzen Spreizhülse in den Zylinder 1 hineingedrückt. Um den Schieber 2 und den Kolben 3 in einfacher Weise in Ausgangsstellung in den Zylinder einführen zu können, weist der Zylinder 1 einen Entlüftungskanal 11 auf, der ein Einschieben des Kolbens 3 bis zur Ausgangsstellung ohne Kraftwirkung ermöglicht.

Bei Einwirkung der Kraft 52 wird nun der Kolben 3 mit Spreizhülse 4 immer weiter in den Zylinder 1 hineingeschoben, so daß die im Zylinderhohlraum 53 enthaltene Luft immer weiter komprimiert wird und diese komprimierte Luft über die Bohrungen 9 der Spreizhülse und die Schlitzausnehmung 10 des Kolbens auf die Innenwand des spreizbaren Kolbens 3 wirkt.

Wird durch die einwirkende Kraft 52 die Kompression nun größer, so übt die komprimierte Luft eine radial nach außen gerichtete Kraftwirkung auf den Kolben 3 aus, so daß dieser sich ausdehnt und die Spreizhülse 4 an die Innenwand des Zylinders 1 drückt. Neben der durch die Kompression der Luft erzeugten Dämpfungswirkung wird nun durch Reibungskraft zwischen Spreizhülse 4 und Zylinderwand eine zusätzliche Bremswirkung ausgeübt, welche durch Auswahl der Reibungszahl der Spreizhülse 4 einstellbar ist. Somit ergibt sich zunächst eine progressiv steigende Brems- und Dämpfungswirkung durch die Anordnung.

Wie bereits beschrieben weist die Spreizhülse 4 an ihrem Außenumfang Luftkanäle 13 und 14 auf, deren Querschnitt derart bemessen ist, daß im Verlaufe der durch die Kompression der Luft erfolgenden Brems- und Dämpfungsvorgangs die im Zylinderhohlraum komprimierte Luft kontrolliert nach außen entweichen kann, so daß die Brems- und Dämpfungswirkung der Anordnung ein gewisses Maß nicht übersteigt, bis der Kolben 3 in seiner Endstellung 51 angelangt ist. Nach dem Erreichen der Endstellung 51 sind der Zylinderhohlraum 53 und der Hohlraum des Kolbens 3 nahezu drucklos, so daß das Brems- und Dämpfungselement in dieser Stellung verharrt.

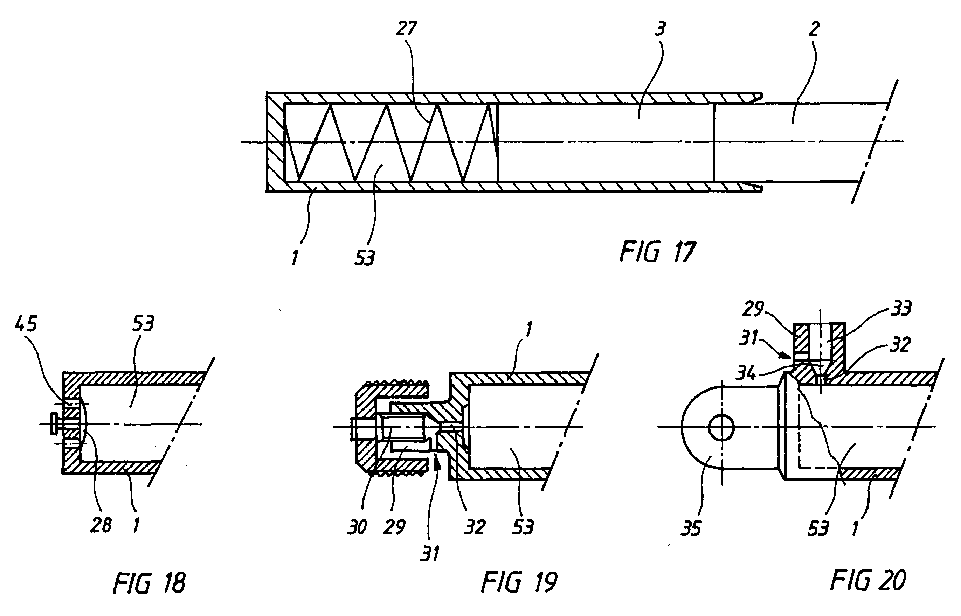

Durch eine Rückstellfeder 27 (vgl. Figur 17) oder ein ähnliches Rückstellelement wird der Kolben Beendigung der Kraftwirkung 52 in seine Ausgangslage zurückbewegt. Ebenso ist es möglich, daß der Kolben durch das bewegliche Möbelteil in seine Ausgangslage zurückgebracht wird.

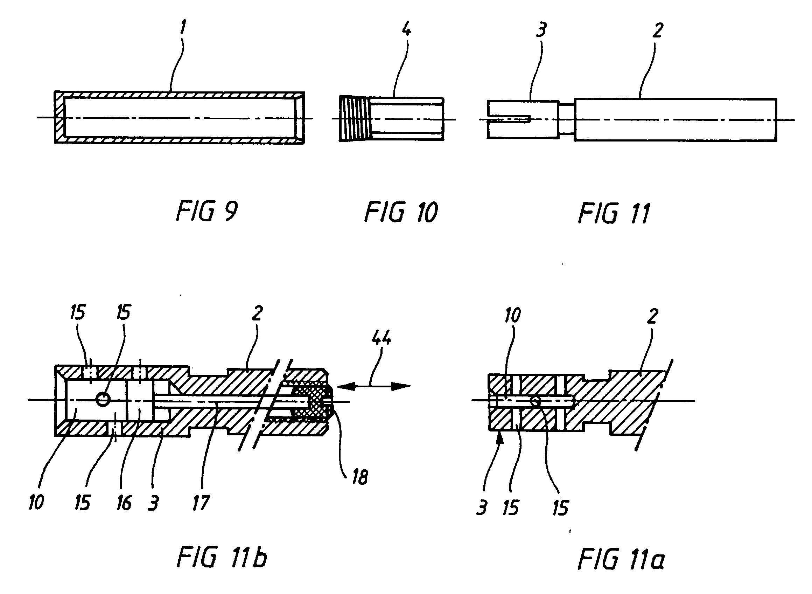

Die Figuren 9 und 11 zeigen nochmals die einzelnen Komponenten des Brems- und Dämpfungselements gemäß Figuren 1 bis 8.

In einer abgewandelten Ausführungsform gemäß Figur 11a ist ein an seinem Außenumfang glatt ausgebildeter Kolben vorgesehen, welcher mit seiner Schlitzöffnung 10 verbundene Querbohrungen 15 aufweist. In diese Querbohrungen 15 gelangt die komprimierte Luft und wirkt dadurch direkt auf die Spreizhülse 4 ein, welches in Folge dessen gedehnt wird. Diese Ausführung des Kolbens hat den Vorteil, daß der Kolben nicht dehnbar oder spreizbar ausgebildet sein muß, sondern relativ starr ausgebildet sein kann.

Figur 11b zeigt eine abgewandelte Ausführung des Kolbens 3 gemäß Figur 11a, wobei eine Steuerungseinrichtung vorgesehen ist, durch welche die Bremswirkung des Kolbens 3 gesteuert werden kann. Die Steuerungseinrichtung besteht im wesentlichen aus einem weiteren kleinen Kolben 16, welcher im durch die Ausnehmung 10 gebildeten Hohlraum beweglich angeordnet ist. Durch diesen beweglichen Kolben können eine oder mehrere Querbohrungen 15 gezielt überdeckt werden, so daß sich die Kraftwirkung auf die Spreizhülse und somit die Bremswirkung steuern läßt. Die Bewegung des Kolbens 16 erfolgt über eine Kolbenstange 17, welche an einer Verstellschraube 18 befestigt ist. Durch Drehen der Verstellschraube ist es möglich, den Kolben 16 axial in Richtung 44 zu bewegen.

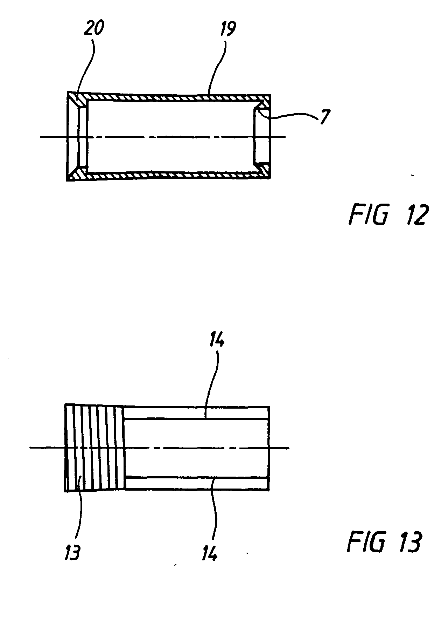

Die Figuren 12 und 13 zeigen eine Spreizhülse 19, welche an die Ausführung des Kolbens 3 gemäß Figuren 11, 11 a und 11 b angepaßt ist. Die Spreizhülse 19 besitzt am Innenumfang keine Nuten sondern liegt glatt auf dem Kolben 3 auf. Die Dichtzone 20 der Spreizhülse 19 ist derart ausgebildet, daß der vordere Rand der Stirnseite des Kolbens 3 übergriffen wird, so daß die Spreizhülse 19 fest und unverschieblich auf dem Kolben 3 aufliegt. Wie bereits beschrieben sind am Außenumfang der Spreizhülse 19 ebenfalls Luftkanäle 13, 14 vorgesehen.

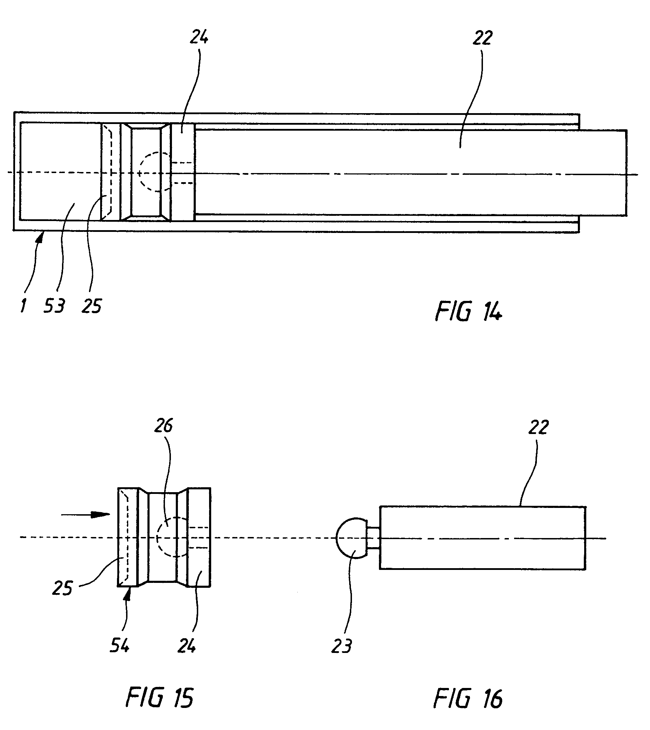

Die Figuren 14 bis 16 zeigen eine weitere Ausführungsform des Brems- und Dämpfungselementes. Man erkennt wiederum den Zylinder 1, in welchem ein Kolben 24 in Form eines Diabolos mit Dichtzone 54 über einen Schieber 22 in Längsrichtung verschieblich geführt ist. Der Schieber 22 weist an seinem vorderen Ende ein Kupplungsglied 23 auf, welches in eine zugeordnete Ausnehmung 26 des Kolbens eingreift, so daß Schieber 22 und Kolben 24 fest miteinander verbunden werden können.

An seiner Stirnseite weist das Kolbenelement 24 eine Vertiefung 25 auf, so daß sich das Kolbenelement durch Einschieben und Erhöhen des Druckes im inneren des Zylinders 1 an seinen Außenflanken im Bereich der Dichtzone 54 radial ausdehnt wird und der gewünschte Bremseffekt eintritt. Auf eine separate Dichthülse wird verzichtet. Statt dessen ist der Kolben 24 aus geeignetem elasomeren Material gefertigt.

Figur 17 zeigt allgemein das Brems- und Dämpfungselement mit Zylinder 1, Schieber 2 und Kolben 3. Durch eine Rückstellfeder 27 wird der Kolben 3 nach Entlastung des Schiebers immer wieder in seine Ausgangslage zurückgesetzt.

Um das beim Rücksetzen des Kolben 3 im Hohlraum 53 des Zylinders entstehende Vakuum zu vermeiden, ist nach Abbildung 18 vorgesehen, z. B. an der Stirnseite des Zylinders ein Rückschlagventil 28 mit Entlüftungbohrungen 45 anzuordnen. Solange der Kolben 3 in den Zylinder 1 hineingedrückt wird arbeitet das Brems- und Dämpfungselement wie weiter oben beschrieben.
Lastet nun keine Kraft mehr auf dem Schieber, so versucht die Rückstellfeder 27 der Kolben 3 in seine Ausgangsstellung zurückzuschieben. Durch die einsetzende Vakuumbildung innerhalb des Zylinders 1 beim Zurückschieben des Kolbens 3 öffnet sich das Rückschlagventil 28, so daß über die Entlüftungsbohrungen 45 Luft in den Zylinderhohlraum 53 eindringen kann und das Rückstellen des Kolbens 3 ohne Gegenkraft erfolgen kann.

Die Figuren 19 und 20 zeigen eine abgewandelte Ausführungsform der Zylinderentlüftung zur vereinfachten Rückstellung des Kolbens 3. Im vorderen Bereich des Zylinders 1 ist dazu ein Ventilfortsatz 29 angeformt, welcher eine zentrale Bohrung 33 aufweist, die am Ende in einer Konusspitze 34 ausläuft und in eine Bohrung 32 übergeht, die im Hohlraum 53 des Zylinders 1 endet. In die Bohrung 33 ist eine Rändelschraube 30 eingedreht, deren Spitze an den Konus 34 der Bohrung 33 angepaßt ist. Eine weitere Bohrung 31 ermöglicht den Luftaustausch zwischen Innenraum 53 des Zylinders 1 und Außenatmosphäre. Je nach dem wie weit die Rändelschraube 30 eingedreht wird, ändert sich der freie Querschnitt im Übergangsbereich der Bohrungen 31, 32, so daß der Luftdurchsatz dadurch gesteuert werden kann. In Figur 19 ist angedeutet, daß zusätzlich ein Rückschlagventil 28 vorgesehen sein kann, um ein Eindringen von Luft während der Arbeitsphase des Brems- und Dämpfungselements in den Zylinder 1 auszuschließen.

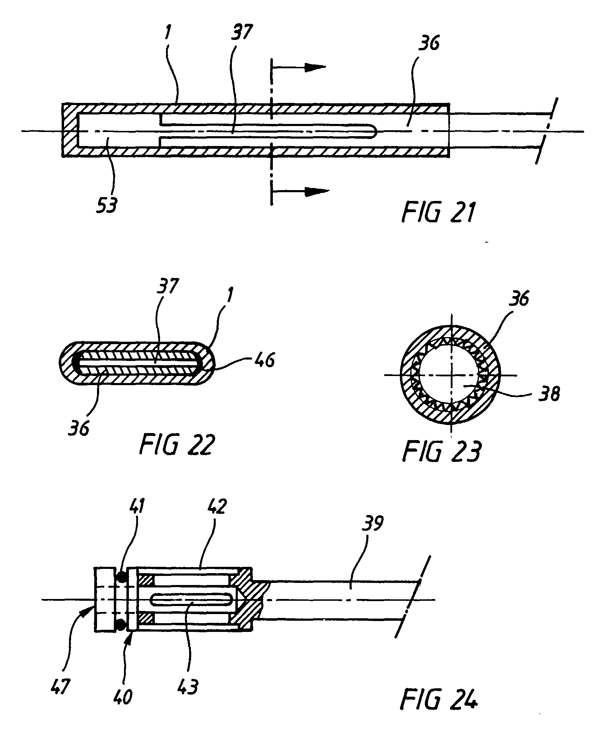

In einer weiteren Ausführungsform gemäß den Figuren 21 bis 23 ist das Brems- und Dämpfungselement lediglich zweiteilig ausgebildet und besteht wiederum aus dem Zylinder 1 und einem radial nach außen spreizbaren Kolben 36, welcher einen Längsschlitz 37 aufweist. Durch die weiter oben beschriebene Kompressionswirkung beim Einschieben des Spreizkolbens 36 drückt die komprimierte Luft den Spreizkolben radial nach außen, so daß die gewünschte Bremswirkung erzielt wird.

Aus Figur 22 ist ersichtlich, daß das Brems- und Dämpfungselement im Querschnitt oval ausgebildet sein kann, wobei der Längsschlitz 37 an den Seiten z. B. durch eine Dichtung 46 abgedichtet sein kann, um einen Luftverlust bei Kompression des Zylinderluftvolumens zu vermeiden.

Gemäß Figur 23 kann der Zylinder 1 bzw. der Spreizkolben 36 im Querschnitt auch kreisförmig ausgebildet sein, wobei in diesem Beispiel der Spreizkolben 36 eine Sternbohrung 38 aufweist.
Durch die sternartige Bohrung 38 wird die wirksame Oberfläche der Bohrung erhöht, so daß sich demzufolge die radiale Kraftwirkung auf die Innenseite des Spreizelementes 36 erhöht.

Figur 24 zeigt eine weitere Ausführungsform eines Kolbens 40, welcher wiederum mit einem Schieber 39 verbunden ist. Der Kolben 40 weist eine zentrale Bohrung 47 auf, welche über die gesamt Länge des Kolbens 40 geführt ist. Im vorderen Bereich ist am Außenumfang des Kolbens ein O-Ring angeordnet, welcher sich an der Innenseite des Zylinders dichtend anlegt. Über den Außenumfang des mittleren Kolbenteils 40 ist eine Spreizhülse 42 gelegt, welche radial nach außen dehnbar ist. Die Bohrung 47 setzt sich in radial gerichteten Schlitzausnehmungen 43 fort, welche vom inneren des Kolbens 40 bis hin zum Spreizelement 42 geführt sind. Beim Einschieben des Kolbens 40 in den Zylinder 1 setzt sich der Kompressionsdruck durch die Bohrung 47 und die Schlitzausnehmungen 43 fort und wirkt direkt auf die Spreizhülse 42, welche sich dadurch radial ausdehnt und an die Innenwand des Zylinders 1 gepreßt wird. Neben der Dämpfungswirkung durch Kompression wird dadurch eine Bremswirkung erzielt.

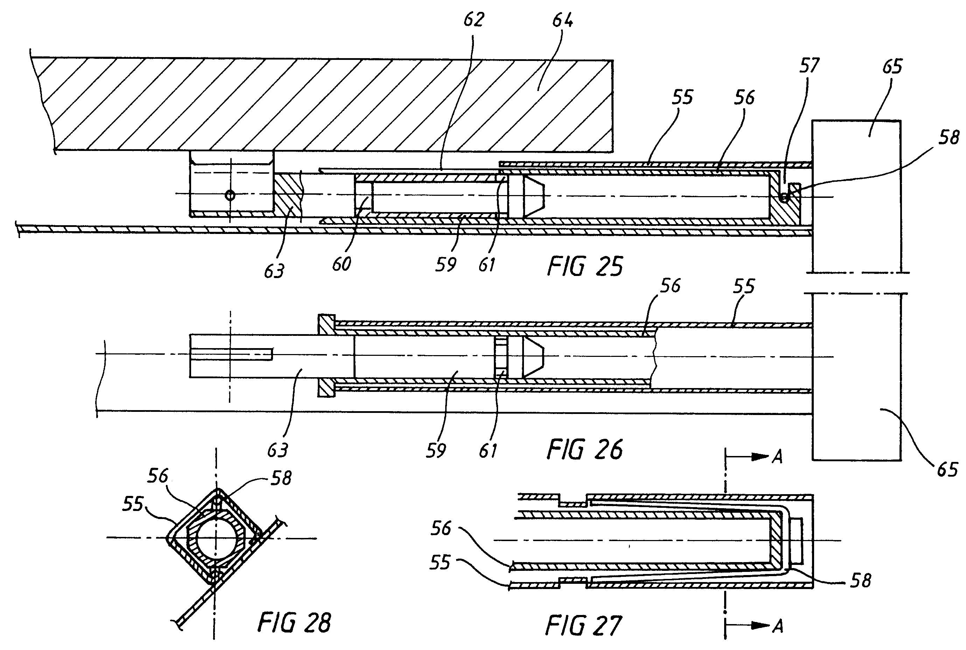

Die Figuren 25 bis 28 zeigen eine weitere Ausführung eines an einer Schublade montierten Dämpfungselements. Dabei ist an der Schubladenfront 65 ein Außenzylinder 55 befestigt, in welchem ein Innenzylinder 56 mittels einer, in eine Nut 57 an der Stirnseite des Innenzylinders 56 eingreifenden Halteklammer 58 schwimmend gelagert ist. Die schwimmende Lagerung des Innenzylinders 56 gleicht das Schubladenspiel in quer zur Auszugsrichtung aus.
Der Kolben 59 ist im Innenzylinder 56 geführt und ist an seiner Stirnfläche vorzugsweise konisch abgeschrägt ausgebildet, da der Kolben bei vollständigem Ausziehen der Schublade aus dem Innenzylinder 56 herausgezogen wird und erst beim Einschieben der Schublade wieder in den Innenzylinder eingeführt wird, was durch die konische Ausbildung der Kolbenstirnseite erleichtert wird.

Der Kolben 59 ist rückseitig mit einem Schieber 63 verbunden, welcher am Möbelkorpus 64 gelagert ist. Weiterhin weist der Kolben 59 rückseitig eine Bohrung 60 auf, welche in den Kolbenhohlraum mündet der mit Entlüftungsbohrungen 61 verbunden ist, die im Bereich der Kolbenstirnseite austreten.

Der Innenzylinder 56 weist eine schlitzartige Ausnehmung 62 auf, die über den Entlüftungsbohrungen 61 zu liegen kommen, so daß im Bereich bzw. in der Stellung des Kolbens, in welcher keine Dämpfungswirkung erwünscht ist, die Luft aus dem Hohlraum zwischen Innenzylinder und Kolben schnell entweichen kann und das Dämpfungselement der Schubladenbewegung keinen Widerstand entgegensetzt.

Die Halteklammer 58 ist zwischen Innenzylinder 56 und Außenzylinder 55 angeordnet, ist etwa U-förmig ausgebildet und liegt in der Nut 57 des Innenzylinders 56, wobei sich die Schenkel am Außenzylinder 55 abstützen.

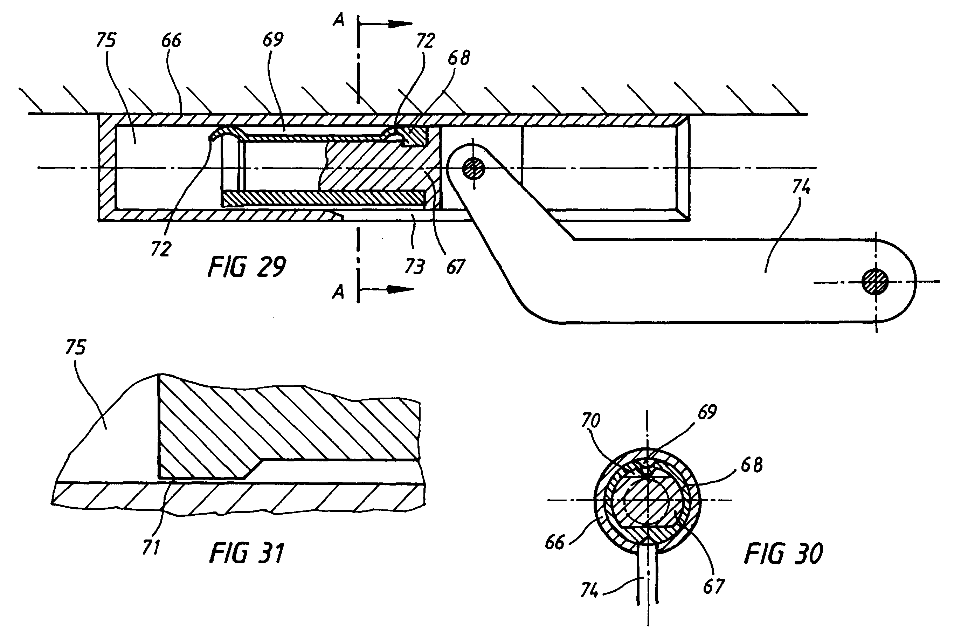

Die Figuren 29 bis 31 zeigen eine Ausführungsform des Dämpfungselements mit einem Zylinder 66, in welchem der Kolben 67 angeordnet ist. Der Kolben 67 ist umgeben von einem Reibelement 68, welches teilweise als eine Art Spreizhülse wirkt. Der Kolben 67 wird mittels eines Schiebers 74 betätigt.

Das Reibelement 68 umschließt den Kolben 67 und bildet an der Stirn- und Endseite des Kolbens jeweils eine Dichtkante 72, wobei zwischen den Dichtkanten 72 eine etwa V-förmige Nut 69 ausgebildet wird.
Unterhalb der Nut 69 ist ein Luftkanal 70 vorgesehen, der mit dem von Zylinder und Kolben gebildeten Hohlraum 75 in Verbindung steht.
Beim Einschieben des Kolbens 67 in den Zylinder 66 wird die Luft im Hohlraum 75 komprimiert und gelangt in den Luftkanal 70, wobei durch den sich aufbauenden Druck der V-förmige Abschnitt des Reibelements 68 nach außen an die Innenwand des Zylinders 66 gedrückt wird und die Reibungskraft zwischen Kolben und Zylinder erhöht.
Durch einen Entlüftungskanal 71 kann die im Hohlraum 75 komprimierte Luft langsam entweichen, so daß wenn der Druck im Hohlraum 75 sich abbaut und einen gewissen Wert unterschreitet, das Reibelement 68 automatisch in seine Ausgangsstellung zurückklappt und wiederum die V-förmige Nut 69 ausbildet.
Vorteil diese Ausführung ist, daß ohne Druckaufbau im Hohlraum 75 die Reibung zwischen Zylinder 66 und Kolben 67 sehr gering ist, und nur im letzen Moment des Einschiebens des Zylinders, wenn sich ein entsprechender Druck im Hohlraum 75 aufbaut, das Reibelement 68 im Bereich der Nut 69 durch den Luftdruck nach außen klappt und durch die zusätzliche, starke Reibung das Dämpfungselement bremst.
In der Stellung des Kolbans, in welcher keine Dämpfung erfolgen soll, wird die schnelle Entlüftung des Hohlraumes 75 durch eine schlitzförmige Ausnehmung 73 in der Zylinderwand sichergestellt.

### Zeichnungslegende

- 1: Zylinder
- 2: Schieber
- 3: Kolben
- 4: Spreizhülse
- 5: Rippen
- 6: Nuten
- 7: Dichtlippe
- 8: Dichtzone
- 9: Bohrung
- 10: Ausnehmung
- 11: Enlüftungskanal
- 12: Mitnehmerflansch
- 13: Luftkanal
- 14: Luftkanal
- 15: Querbohrung
- 16: Kolben
- 17: Kolbenstange
- 18: Verstellschraube
- 19: Spreizhülse
- 20: Dichtzone
- 21: Dichtlippe
- 22: Schieber
- 23: Kupplungsglied
- 24: Kolben
- 25: Vertiefung
- 26: Ausnehmung
- 27: Rückstellfeder
- 28: Rückschlagventil
- 29: Ventilfortsatz
- 30: Rändelschraube
- 31: Bohrung
- 32: Bohrung
- 33: Bohrung
- 34: Konusspitze
- 35: Befestigungsflansch
- 36: Spreizkolben
- 37: Längsschlitz
- 38: Sternbohrung
- 39: Schieber
- 40: Kolben
- 41: O-Ring
- 42: Spreizhülse
- 43: Schitzausnehmung
- 44: Richtung
- 45: Entlüftungsbohrung
- 46: Dichtung
- 47: Bohrung
- 48: Ausnehmung
- 48: Ausnehmung
- 49: Kupplungsflansch
- 50: Befestigungslaschen
- 51: Endstellung
- 52: Kraft
- 53: Hohlraum
- 54: Dichtzone
- 55: Außenzylinder
- 56: Innenzylinder
- 57: Nut
- 58: Halteklammer
- 59: Kolben
- 60: Bohrung
- 61: Entlüftungsbohrung
- 62: Schlitzausnehmung
- 63: Schieber
- 64: Möbelkorpus
- 65: Schubladenfront
- 66: Zylinder
- 67: Kolben
- 68: Reibelement
- 69: Nut
- 70: Luftkanal
- 71: Entlüftungsbohrung
- 72: Dichtkante
- 73: Schlitzausnehmung
- 74: Schieber
- 75: Hohlraum

## Patentansprüche

1. Brems- und Dämpfungselement für bewegliche Möbelteile, **gekennzeichnet durch** ein Zylinderelement (1) in welchem ein Kolben (3) längsbeweglich aufgenommen ist, der eine stirnseitige Ausnehmung (10, 37, 48) aufweist, die mit dem durch den Zylinder (1) und den Kolben (3) gebildeten luftgefüllten Hohlraum (53) verbunden ist, wobei durch Kompression der in dem Hohlraum (53) und der Ausnehmung befindlichen Luft eine radiale Spreizung des Kolbens (3) und/oder eines am/im Kolben (3) angeordneten Elementes (4; 19; 42; 68) erfolgt.

2. Brems- und Dämpfungselement nach Anspruch 1, dadurch gekennzeichnet, daß das Zylinderelement (1) eine einseitig offene, längliche und zylindrische oder ovale Bohrung aufweist.

3. Brems- und Dämpfungselement nach einem der Ansprüche 1 oder 2, dadurch gekennzeichnet, daß die Ausnehmung (10, 37, 48) des Kolbens (3) schlitzförmig länglich ausgebildet ist.

4. Brems- und Dämpfungselement nach einem der Ansprüche 1 bis 3, dadurch gekennzeichnet, daß der Kolben (3) mit einem Schieber (2) verbunden ist, durch den der Kolben (3) in Längsrichtung beweglich ist.

5. Brems- und Dämpfungselement nach einem der Ansprüche 1 bis 4, dadurch gekennzeichnet, daß der Schieber (2) an der Längsseite eine einseitige Ausnehmung (48) mit Kupplungsflansch (49) zur Kupplung mit einem Möbelteil aufweist.

6. Brems- und Dämpfungselement nach einem der Ansprüche 1 bis 5, dadurch gekennzeichnet, daß am Außenumfang des Kolbens (3) eine oder mehrere umlaufende Ringe oder Rippen (5) ausgebildet sind.

7. Brems- und Dämpfungselement nach einem der Ansprüche 1 bis 6, dadurch gekennzeichnet, daß der Kolben (3) ganz oder teilweise mit einer elastischen Spreizhülse (4) umgeben ist.

8. Brems- und Dämpfungselement nach einem der Ansprüche 1 bis 7, dadurch gekennzeichnet, daß die Stirnseite des Kolbens (3) einen umlaufenden Flansch (12) aufweist.

9. Brems- und Dämpfungselement nach einem der Ansprüche 1 bis 8, dadurch gekennzeichnet, daß die Spreizhülse (4) rohrförmig ausgebildet ist und an der Innenwand Nuten (6) zum Eingriff in zugeordnete Rippen (5) des Kolbens (3) aufweist.

10. Brems- und Dämpfungselement nach einem der Ansprüche 1 bis 9, dadurch gekennzeichnet, daß die Spreizhülse (4) ein Stück über den Kolben (3) hervorsteht und der Durchmesser des überstehenden Teils leicht konisch erweitert ist, so daß eine Dichtzone (8) ausbildet wird, die im Dichtsitz an der Innenwand des Zylinderelements (1) anliegt.

11. Brems- und Dämpfungselement nach einem der Ansprüche 1 bis 10, dadurch gekennzeichnet, daß im Bereich der Dichtzone (8) am Außenumfang der Spreizhülse (4) wenigstens ein schraubenförmiger Luftkanal (13) vorgesehen ist, welcher in wenigstens einen in Längsrichtung verlaufenden Luftkanal (14) größeren Querschnitts übergeht.

12. Brems- und Dämpfungselement nach einem der Ansprüche 1 bis 11, dadurch gekennzeichnet, daß der Kolben (3) relativ starr ausgebildet ist und von der in Längsrichtung verlaufenden Ausnehmung (10) eine oder mehrere Querbohrungen (15) abgehen, die sich bis an die Umfangsfläche des Kolbens (3) erstrecken, so daß die komprimierte Luft direkt auf die Spreizhülse (19) wirkt und diese radial gedehnt wird.

13. Brems- und Dämpfungselement nach einem der Ansprüche 1 bis 12, dadurch gekennzeichnet, daß in der Ausnehmung (10) des Kolbens (3) ein weiterer Kolben (16) verschieblich angeordnet ist, wobei die Verschiebung über eine Verstellschraube (18) erfolgt, die über eine Kolbenstange (17) auf den Kolben (16) wirkt.

14. Brems- und Dämpfungselement nach einem der Ansprüche 1 bis 13, dadurch gekennzeichnet, daß der Kolben (24) etwa die Form eines Diabolos aufweist und an der dem Hohlraum (53) zugewandten Stirnseite eine Dichtzone (54) ausbildet, wobei die Stirnseite eine Vertiefung (25) aufweist.

15. Brems- und Dämpfungselement nach einem der Ansprüche 1 bis 14, dadurch gekennzeichnet, daß im Hohlraum (53) eine Rückstellfeder (27) angeordnet ist.

16. Brems- und Dämpfungselement nach einem der Ansprüche 1 bis 15, dadurch gekennzeichnet, daß in der Wand des Zylinders (1) ein Rückschlagventil (28) mit Entlüftungsbohrungen (47) vorhanden ist.

17. Brems- und Dämpfungselement nach einem der Ansprüche 1 bis 16, dadurch gekennzeichnet, daß die Zylinderwand einen Ventilfortsatz (29) mit einer zentralen Bohrung (33) aufweist, in welche eine Rändelschraube (30) eingesetzt ist und einem Luftpfad, gebildet durch die Bohrungen (31, 32), dessen Durchgangsquerschnitt durch die Position der Rändelschraube (30) veränderlich ist.

18. Brems- und Dämpfungselement nach einem der Ansprüche 1 bis 17, dadurch gekennzeichnet, daß das Zylinderelement einen Befestigungsflansch (35, 50) aufweist.

19. Brems- und Dämpfungselement nach einem der Ansprüche 1 bis 18, dadurch gekennzeichnet, daß von der in Längsrichtung des Kolbens (40) verlaufenden Ausnehmung (10, 47) eine oder mehrere Schlitzausnehmungen (43) abgehen, die sich bis an die Umfangsfläche des Kolbens (40) erstrecken, so daß die komprimierte Luft direkt auf eine Spreizhülse (42) wirkt und diese radial gedehnt wird.

20. Brems- und Dämpfungselement nach einem der Ansprüche 1 bis 19, daß der Zylinder aus einem Außenzylinder (55) und einem in diesem schwimmend gelagerten Innenzylinder (56) besteht.

21. Brems- und Dämpfungselement nach Anspruch 19, dadurch gekennzeichnet, daß die schwimmende Lagerung mittels einer Halteklammer erfolgt, die in einer Nut (57) des Innenzylinders (56) befestigt ist und sich an der Innenwand des Außenzylinders (55) abstützt.

22. Brems- und Dämpfungselement nach einem der Ansprüche 1 bis 21, dadurch gekennzeichnet, daß der Kolben (67) von einem Reibelement (68) umgeben ist, welches im Bereich der Innenwand des Zylinders (66) eine V-förmige Nut (69) ausbildet, wobei das Reibelement (68) bei entsprechendem Druck im Bereich der Nut (69) verformt wird und sich an die Innenwand des Zylinders (66) anlegt.
